# EUROPEAN PATENT SPECIFICATION

(11) **EP 2 915 288 B1**
(45) Date of publication and mention of the grant of the patent: **13.09.2017**
(21) Application number: 13789934.0
(22) Date of filing: 30.10.2013
(51) Int. Cl.: H04L 12/707, H04L 12/703, H04W 40/36, H04W 84/18, H04W 88/04

(54) **IP PACKET TRANSMISSION USING VEHICULAR TRANSPORT**
IP-PAKETÜBERTRAGUNG MITTELS FAHRZEUGTRANSPORT
TRANSMISSION DE PAQUETS IP À L'AIDE D'UN TRANSPORT DE VÉHICULE

(30) Priority: 05.11.2012 US 201213669065
(43) Date of publication of application: 09.09.2015
(73) Proprietor: Cisco Technology, Inc., San Jose, CA 95134 (US)
(72) Inventor: MAHAMUNI, Atul, B., Fremont, CA 94539 (US); VASSEUR, Jean-philippe, 38410 Saint Martin d'Uriage (FR)
(74) Representative: Kazi, Ilya
(86) International application number: PCT/US2013/067462
(87) International publication number: WO 2014/070866

(56) References cited:
- US-A1- 2009 285 190
- US-A1- 2010 208 662
- PIETILÄINEN ANNA-KAISA ET AL: "MobiClique: Middleware for Mobile Social Networking", WOSN '09: PROCEEDINGS OF THE 2ND ACM WORKSHOP ON ONLINE SOCIAL NETWORKS, BARCELONA, SPAIN, ACM, NEW YORK, 17 August 2009 (2009-08-17), pages 49-54, XP002568345, DOI: 10.1145/1592665.1592678 [retrieved on 2010-02-10]

## Description

### TECHNICAL FIELD

The present disclosure relates generally to computer networks, and, more particularly, to communicating messages from a field area router to a destination.

### BACKGROUND

Field area routers (FARs) may be installed in strategic locations in order to communicate wirelessly with a variety of endpoints in a field area network (FAN), such as for utility grids (e.g., electric meters and distribution automation devices), vehicular communication, etc. Field area routers provide communication for the endpoints in the FAN to one or more destinations outside of the FAN (e.g., over the Internet), such as a control center, data collection sinks, etc. Typically, for communication outside of the FAN, FARs tend to use a backhaul link such as 3G/LTE, Wimax, or WiFi, which are not always reliable or may otherwise become temporarily or permanently disconnected. As such, a disconnected FAR may be unable to communicate messages over its backhaul link, which can be especially problematic for critical messages.

US 2010/208662 discloses a Spontaneous Area Network (SPAN) that is formed by mobile and fixed nodes using wireless transmission links between nodes, usually in a nearby geographical area. Applications allow users to create, join, leave, and manage SPANs and groups in a SPAN. Transmission power of the wireless network interface is dynamic, varying depending on battery level, type of information to transmit, state and topology of the network. US 2009/285190 discloses a system in which a computing device examines available network interfaces and identifies the network to which the network interfaces provide access, and performs networking tasks on interfaces based on the network identified. An article entitled "MobiClique: Middleware for Mobile Social Networking" by A. Pietilainen, et al, published in WOSN '09: Proceedings of the 2nd ACM Workshop on Online Social Networks, Barcelona, Spain, 17th August 2009, pages 49-54 discloses a mobile social networking middleware named MobiClique, which forms and exploits ad hoc social networks to disseminate content using a store-carry-forward technique.

### BRIEF DESCRIPTION OF THE DRAWINGS

The embodiments herein may be better understood by referring to the following description in conjunction with the accompanying drawings in which like reference numerals indicate identically or functionally similar elements, of which:
FIG. 1 illustrates an example communication network;
FIG. 2 illustrates an example network device/node;
FIG. 3 illustrates an example view of the communication network with respect to a disconnected router;
FIG. 3A illustrates an example view of a timer setting on a disconnected router;
FIG. 4 illustrates an example view of a traveling mobile device in the communication network;
FIG. 5 illustrates an example view of the communication network with respect to a connected router;
FIG. 6 illustrates an example view of the disconnected router restoring connectivity in the communication network;
FIG 7 illustrates an example simplified procedure for transmitting an IP packet from a disconnected router to a destination using a mobile device from the perspective of the disconnected router; and
FIG. 8 illustrates another example simplified procedure for transmitting an IP packet from a disconnected router to a destination using a mobile device from the perspective of a connected router.

### DESCRIPTION OF EXAMPLE EMBODIMENTS

### Overview

According to one or more embodiments of the disclosure, a local stationary router may detect a disconnected backhaul link and may send a message (e.g., a critical message) to a first traveling mobile device, causing the message to be sent toward a destination via a remote stationary router. In response to receiving an acknowledgment from the remote stationary router, the local stationary router may cease sending copies of the message to other traveling mobile devices.

According to one or more additional embodiments of the disclosure, a local stationary router with a connected backhaul link may receive a message from a first traveling mobile device, where the message originated from a remote stationary router having a disconnected backhaul link. The local stationary router may forward the message to its destination over the connected backhaul link, and in response, the local stationary router may send an acknowledgment toward the remote stationary router via a second traveling mobile device.

### Description

A computer network is a geographically distributed collection of nodes interconnected by communication links and segments for transporting data between end nodes, such as personal computers and workstations, or other devices, such as sensors, etc. Many types of networks are available, ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links. In addition, a Mobile Ad-Hoc Network (MANET) is a kind of wireless ad-hoc network, which is generally considered a self-configuring network of mobile routes (and associated hosts) connected by wireless links, the union of which forms an arbitrary topology.

Smart object networks, such as sensor networks, in particular, are a specific type of network having spatially distributed autonomous devices such as sensors, actuators, etc., that cooperatively monitor physical or environmental conditions at different locations, such as, e.g., energy/power consumption, resource consumption (e.g., water/gas/etc. for advanced metering infrastructure or "AMI" applications) temperature, pressure, vibration, sound, radiation, motion, pollutants, etc and may improve field operations support. Other types of smart objects include actuators, e.g., responsible for turning on/off an engine or perform any other actions. Sensor networks, a type of smart object network, are typically shared-media networks, such as wireless. That is, in addition to one or more sensors, each sensor device (node) in a sensor network may generally be equipped with a radio transceiver or other communication port such as a microcontroller, and an energy source. Often, smart object networks are considered field area networks (FANs), neighborhood area networks (NANs), etc. Generally, size and cost constraints on smart object nodes (e.g., sensors) result in corresponding constraints on resources such as energy, memory, computational speed and bandwidth. Notably, the objects in such networks may be stationary or mobile.

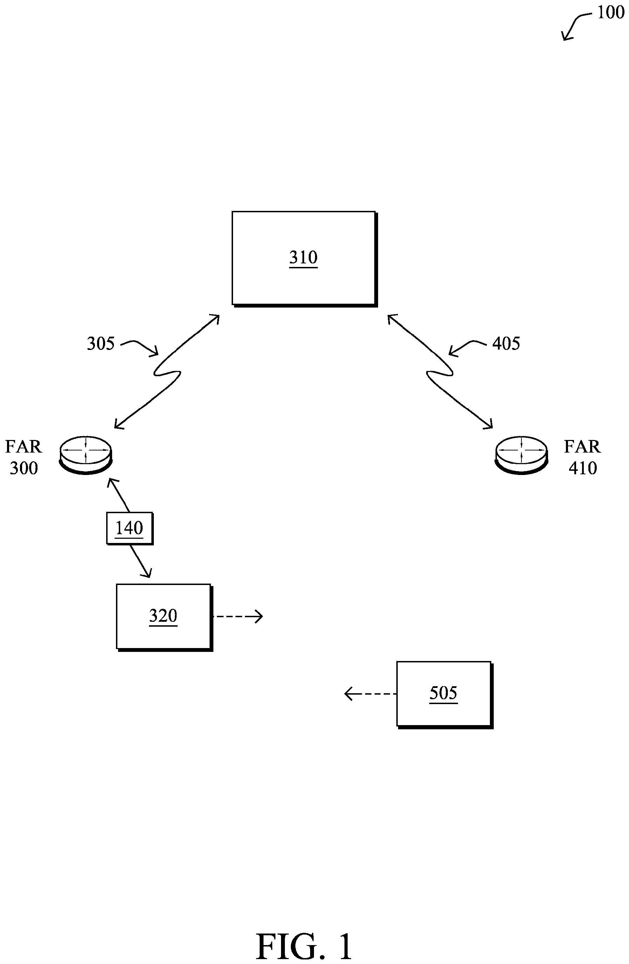

As an example of a FAN involving both mobile and stationary devices, FIG. 1 is a schematic block diagram of an example simplified computer network 100 illustratively comprising a plurality of stationary routers, such as field area routers (FARs) 300 and 410, as well as a plurality of mobile devices traveling within the vicinity of the FARs, such as devices 320 and 505 as shown. Each of the devices may be interconnected by various methods of communication (links), such as wired links or shared media (e.g., wireless links, etc.) where certain mobile devices may be in communication with a particular FAR based on distance, signal strength, current operational status, location, etc. In addition, the FARs may each be connected to one or more destination devices (e.g., a control center) 310 through a backhaul link 305 or 405, as shown. Those skilled in the art will understand that any number of nodes, devices, links, etc. may be used in the computer network, and that the view shown herein is for simplicity.

Data packets 140 (e.g., traffic and/or messages sent between the devices/nodes) may be exchanged among the nodes/devices of the computer network 100 using predefined network communication protocols such as certain known wired protocols, wireless protocols (e.g., IEEE Std. 802.15.4, WiFi, Bluetooth®, etc.), or other shared-media protocols where appropriate. In this context, a protocol consists of a set of rules defining how the nodes interact with each other.

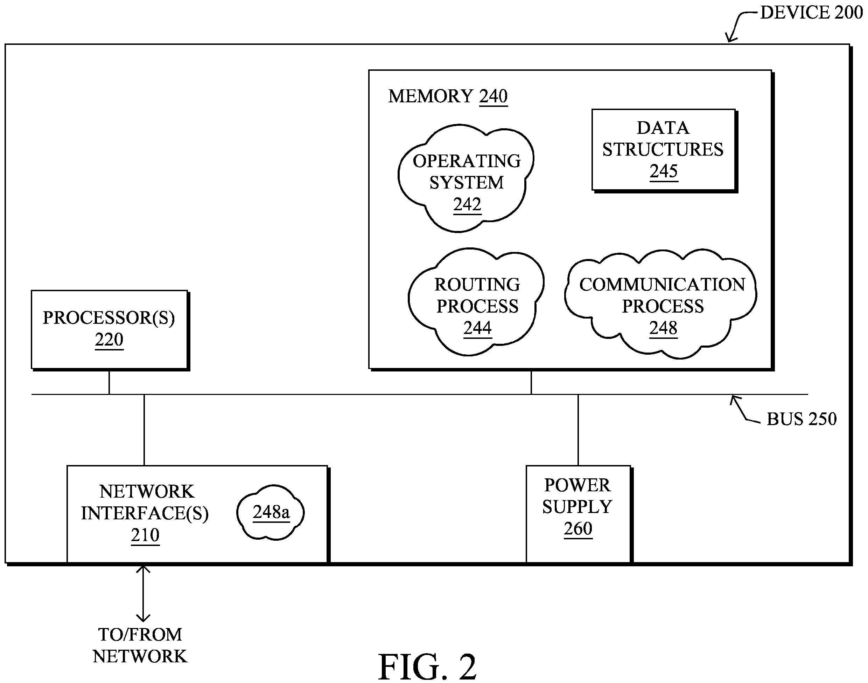

FIG. 2 is a schematic block diagram of an example simplified node/device 200 that may be used with one or more embodiments described herein, e.g., as any of the nodes shown in FIG. 1 above. The device may comprise one or more network interfaces 210 (e.g., wired, wireless, etc.), at least one processor 220, and a memory 240 interconnected by a system bus 250, as well as a power supply 260 (e.g., battery, plug-in, etc.).

The network interface(s) 210 contain the mechanical, electrical, and signaling circuitry for communicating data over links coupled to the network 100. The network interfaces may be configured to transmit and/or receive data using a variety of different communication protocols. Note, further, that certain nodes, particularly the FARs, may have two different types of network connections 210, e.g., wireless (both for the FAN of mobile devices as well as a backhaul link) and wired/physical connections (e.g., for a certain embodiment of the backhaul link), and that the view herein is merely for illustration.

The memory 240 comprises a plurality of storage locations that are addressable by the processor 220 and the network interfaces 210 for storing software programs and data structures associated with the embodiments described herein. The processor 220 may comprise hardware elements or hardware logic adapted to execute the software programs and manipulate the data structures 245. An operating system 242, portions of which are typically resident in memory 240 and executed by the processor, functionally organizes the device by, *inter alia,* invoking operations in support of software processes and/or services executing on the device. These software processes and/or services may comprise routing process/services 244, and an illustrative communication process 248, as described herein. Note that while communication process 248 is shown in centralized memory 240, alternative embodiments provide for the process to be specifically operated within the network interfaces 210, (process "248a").

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while the processes have been shown separately, those skilled in the art will appreciate that processes may be routines or modules within other processes.

Routing process (services) 244 contains computer executable instructions executed by the processor 220 to perform functions provided by one or more routing protocols, such as proactive or reactive routing protocols as will be understood by those skilled in the art. These functions may, on capable devices, be configured to manage a routing/forwarding table (a data structure 245) containing, e.g., data used to make routing/forwarding decisions. In particular, in proactive routing, connectivity is discovered and known prior to computing routes to any destination in the network, e.g., link state routing such as Open Shortest Path First (OSPF), or Intermediate-System-to-Intermediate-System (ISIS), or Optimized Link State Routing (OLSR). Reactive routing, on the other hand, discovers neighbors (i.e., does not have an *a priori* knowledge of network topology), and in response to a needed route to a destination, sends a route request into the network to determine which neighboring node may be used to reach the desired destination. Example reactive routing protocols may comprise Ad-hoc On-demand Distance Vector (AODV), Dynamic Source Routing (DSR), DYnamic MANET On-demand Routing (DYMO), etc. Notably, on devices not capable or configured to store routing entries, routing process 244 may consist solely of providing mechanisms necessary for source routing techniques. That is, for source routing, other devices in the network can tell the less capable devices exactly where to send the packets, and the less capable devices simply forward the packets as directed.

Notably, mesh networks have become increasingly popular and practical in recent years. In particular, shared-media mesh networks, such as wireless networks, are often on what is referred to as Low-Power and Lossy Networks (LLNs), which are a class of network in which both the routers and their interconnect are constrained: LLN routers typically operate with constraints, e.g., processing power, memory, and/or energy, and their interconnects are characterized by, illustratively, high loss rates, low data rates, and/or instability. LLNs are comprised of anything from a few dozen and up to thousands or even millions of LLN routers, and support point-to-point traffic (between devices inside the LLN), point-to-multipoint traffic (from a central control point such at the root node to a subset of devices inside the LLN) and multipoint-to-point traffic (from devices inside the LLN towards a central control point).

An example implementation of LLNs is an "Internet of Things" network. Loosely, the term "Internet of Things" or "IoT" may be used by those in the art to refer to uniquely identifiable objects (things) and their virtual representations in a network-based architecture. In particular, the next frontier in the evolution of the Internet is the ability to connect more than just computers and communications devices, but rather the ability to connect "objects" in general, such as lights, appliances, vehicles, HVAC (heating, ventilating, and air-conditioning), windows and window shades and blinds, doors, locks, etc. The "Internet of Things" thus generally refers to the interconnection of objects (e.g., smart objects), such as sensors and actuators, over a computer network (e.g., IP), which may be the Public Internet or a private network. Such devices have been used in the industry for decades, usually in the form of non-IP or proprietary protocols that are connected to IP networks by way of protocol translation gateways. With the emergence of a myriad of applications, such as the smart grid, smart cities, and building and industrial automation, and cars (e.g., that can interconnect millions of objects for sensing things like power quality, tire pressure, and temperature and that can actuate engines and lights), it has been of the utmost importance to extend the IP protocol suite for these networks.

As an illustrative IoT implementation, with the sharp increase of vehicles on roads in the recent years, leading car manufacturers decided to jointly work with national government agencies to develop solutions aimed at helping drivers on the roads by anticipating hazardous events or avoiding bad traffic areas. One of the outcomes has been a new type of wireless access called Wireless Access for Vehicular Environment (WAVE) dedicated to vehicle-to-vehicle and vehicle-to-roadside communications. While the major objective has clearly been to improve the overall safety of vehicular traffic, promising traffic management solutions and on-board entertainment applications are also expected in this field. For instance, when equipped with WAVE communication devices, cars and roadside units (RSUs) form a highly dynamic network called a Vehicular Ad Hoc Network (VANET), a special kind of Mobile Ad Hoc Network (MANET) where vehicles communicate with one another through wireless infrastructures to the Internet using a multihop-to-infrastructure routing protocol.

As an example, FIG. 1 may specifically illustrate a simplified VANET scenario, where a plurality of vehicles (mobile devices 320 and 505, such as cars, trucks, etc.) may be in proximity to one another, while traveling at different speeds and directions. Also, one or more RSUs (e.g., FARs 300 and 410) may also be present along side the roadway, whether placed specifically for the purpose of vehicular communication (e.g., highways), or else another roadside unit configuration, such as a WiFi hotspot in the city.

As noted above, FARs seeking to communicate with a destination, such as a control center, may lose connectivity of their backhaul link, such as a 3G/LTE, Wimax, or WiFi link. For example, the backhaul link may be generally unreliable and may suffer from temporary outages, or else may have been physically disconnected or tampered with. At such times, the FAR would be unable to transmit messages over the backhaul link, which may be particularly detrimental where such messages are critical, such as messages indicating the disconnected state, other failure or alarm conditions, etc.

### IP Packet Transmission Using Mobile Devices

The techniques herein allow for reliable transmission of IP packets via mobile devices, such as vehicles. In particular, according to the techniques herein, a disconnected FAR may send a message to a destination, such as a control center, via traveling vehicles. The message may be sent from the traveling vehicle to a connected FAR, which then relays the message to the destination. In response to sending the message to the destination, the connected FAR may send an acknowledgment to the disconnected FAR (e.g., again using a mobile device in the opposite direction), preventing duplicate copies of the message.

Illustratively, the techniques described herein may be performed by hardware, software, and/or firmware, such as in accordance with the communication process 248/248a, which may contain computer executable instructions executed by the processor 220 (or independent processor of interfaces 210) to perform functions relating to the techniques described herein, e.g., in conjunction with routing process 244. For example, the techniques herein may be treated as extensions to conventional protocols, such as the various wireless communication protocols, and as such, may be processed by similar components understood in the art that execute those protocols, accordingly.

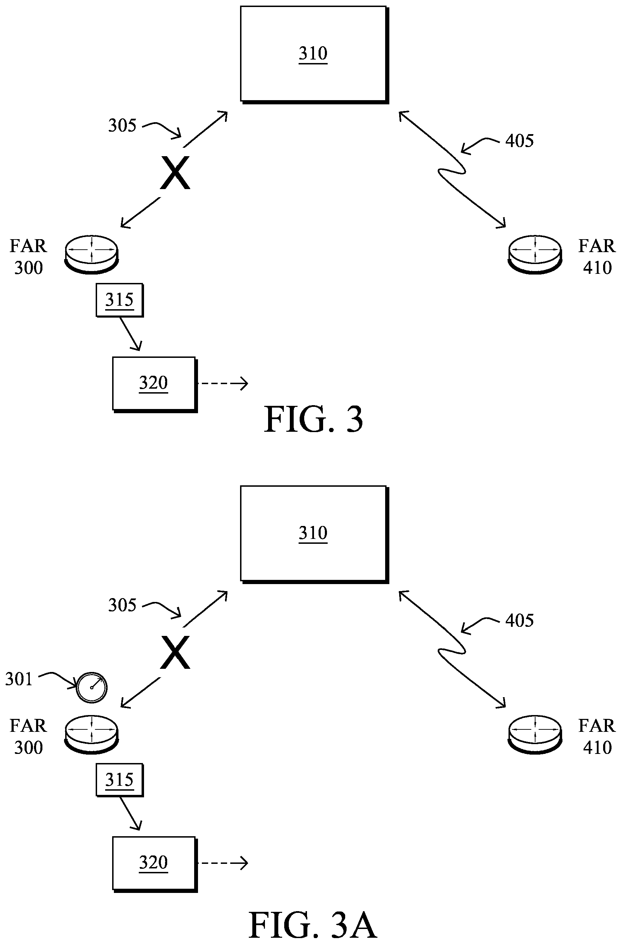

Operationally, the techniques herein allow for a field router with a disconnected backhaul link to compose and transmit a message to a destination, illustratively through vehicular transport. As illustrated in FIG. 3, in the event that a field area router (FAR) 300 loses connectivity to its backhaul link 305 to a destination 310 and the now-disconnected FAR 300 has a message 315 to send to the destination, a mobile device 320 may be used to transmit the message 315 according to the techniques herein. In particular, once the FAR (300) locates a mobile device (e.g., a vehicle), the message may be transmitted to the mobile device 320 in hopes that the mobile device will reach a remote connected FAR, as described below.

In one embodiment, the destination that the disconnected FAR 300 is attempting to send a message to may be a control center or a network management station. For instance, the message may be a critical message, such as a door open alarm, detection of an attempt to tamper, notification of the failed backhaul link, etc. Alternatively or in addition, the message may simply be any desired message, such as measurement data, diagnostic data, system status data, etc. Note that the message 315 may be transmitted to the destination 310 securely, such as by encrypting it with a key shared with the destination 310 where an intended server may decrypt the message and take appropriate action. Furthermore, the messages sent toward the destination may include identifiers indicating which FAR sent the message toward the destination, such that when multiple FARs send messages to multiple mobile devices (e.g., when there is a regional disturbance to multiple backhaul links simultaneously), the identifiers would allow distinguishing between multiple copies of the same message and different messages sent from different FARs.

In certain embodiments, as shown in FIG. 3A, once the FAR 300 sends the message 315 to the mobile device, the FAR 300 may set a timer 301. The timer may be set so that a second message may be sent out within a predefined period of time, without having received an acknowledgment for the first message, as described below. Note that the timer for additional messages may be set to a fixed value or an exponentially decreasing value (e.g., a back-off timer). In this manner, the timer 301 prevents the FAR 300 from attempting to send the message 315 to each traveling device, thereby preventing an overload at the intended destination or remote connected FAR. Note that the number of additional copies to send may be set to a specific (fixed) value, or set to infinite to continue sending messages until the message is successfully received by a connected FAR 410 (or else the backhaul link is restored on the disconnected FAR 300).

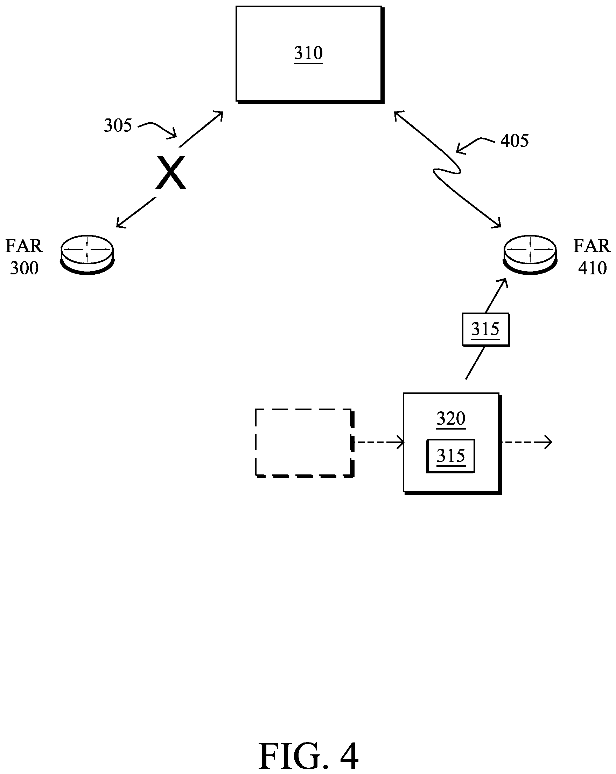

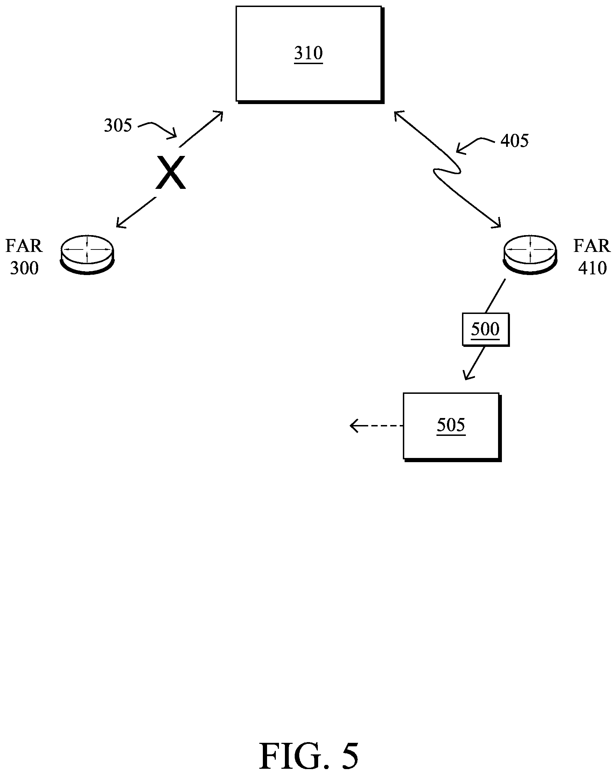

According to the techniques herein, the mobile device 320 hopefully travels to a remote FAR 410 having a backhaul connectivity (link 405) to the destination 310, as illustrated in FIG. 4. In particular, the mobile device 320 may locate a FAR and sends the message 315 to the FAR 410, accordingly. Notably, in one embodiment the remote FAR 410 may indicate that it is connected via a backhaul link in order for the mobile device to transmit the carried message 315, however in other embodiments the mobile device may simply transmit the message to the first FAR encountered in its travels. In response to receiving the message 315 from the traveling mobile device 320, the connected FAR 410 may then send the message 315 to the destination, as further illustrated in FIG. 5. (In the event the mobile device 320 does not reach a connected FAR, e.g., within some configured time limit prior to dropping the message, the disconnected FAR 300 would have sent additional copies of the message 320, as mentioned above.)

According to one or more embodiments herein, the FAR 410 with the operational backhaul link may, in response to sending the message 315 to the destination 310, send an acknowledgment message 500 back to the disconnected FAR 300. For instance, as further illustrated in FIG. 5, the acknowledgment message 500 may be sent back to the disconnected FAR 300 via another traveling mobile device 505. The mobile device 505 carrying the acknowledgment message 500 would need to travel in a direction opposite from the mobile device 320 that carried the original message 315 toward the destination 310. Accordingly, in one embodiment, the connected FAR 410 may determine the direction of the first device 320, and may select the acknowledgment return device 505 based on it traveling in a substantially opposite direction. Alternatively, the acknowledging FAR 410 may send a plurality of messages in hopes that one or more will reach the disconnected FAR 300. In still another embodiment, the connected FAR 410 may continue to send acknowledgments only for as long as it continues to receive copies of the same message 315 from the disconnected FAR 300, implying that the disconnected FAR 300 has yet to receive the acknowledgment 500.

In particular, in response to receiving the acknowledgment message 500, the disconnected FAR 300 may cease sending any copies of the message 315 toward the destination 310, particularly via mobile devices. That is, if the disconnected FAR 300 does not receive an acknowledgment message 500, such as before the timer 301 expires, the disconnected FAR 300 may send a copy of the message to another traveling mobile device.

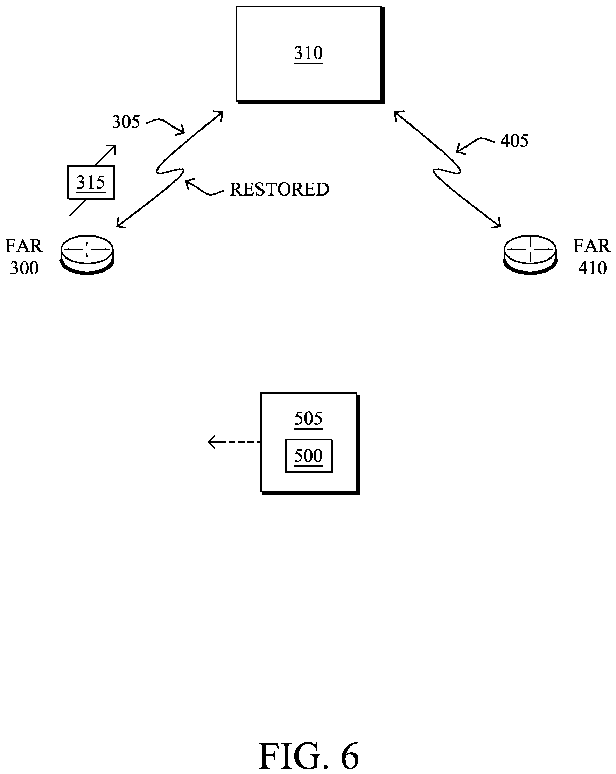

Note that as shown in FIG. 6, should the backhaul link 305 of the disconnected FAR 300 be restored prior to reception of the acknowledgment 500, the FAR 300 may send the message 315 over the connected backhaul link. In one embodiment, the message 315 over the connected backhaul link 305 may include an indication to indicate potential copies of the message 315 from one or more remote FARs according to the techniques above, such as by setting a newly defined flag of an IPv6 ho-by-hop header.

Note that while certain embodiments are described above, other enhancements may be made to the techniques herein depending upon device capability. For instance, if the traveling mobile device 320 carrying the message 315 detects that another mobile device may reach the destination first, the first mobile device 320 may pass the message along to the faster traveling mobile device. Additionally, the disconnected stationary router may detect the vehicle's direction or even ultimate destination, and determines whether to send the message to an alternative vehicle depending on the direction being toward another known FAR in the network 100.

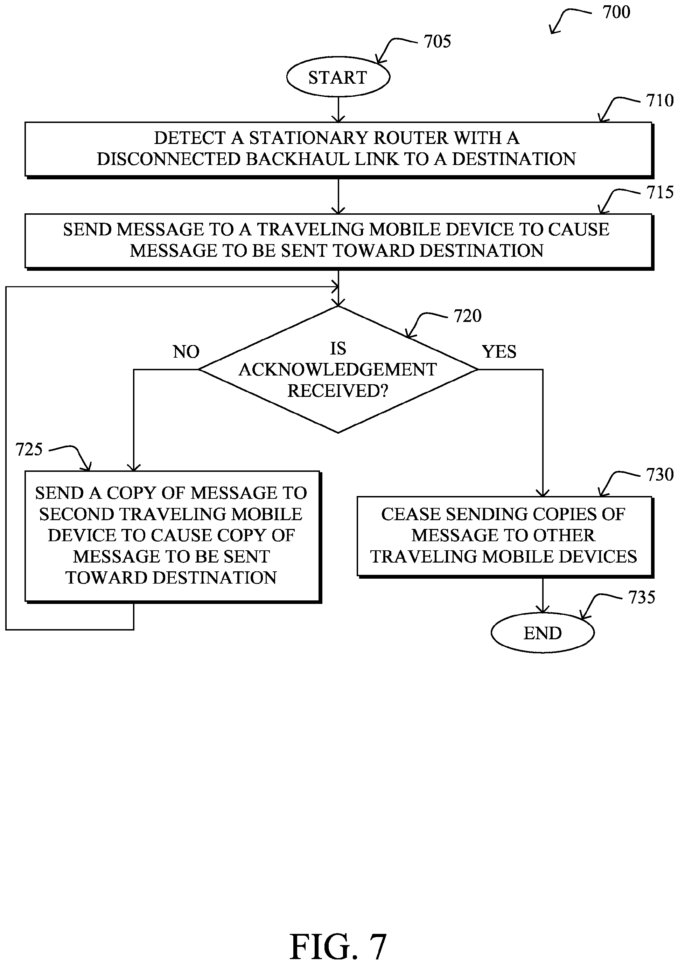

FIG. 7 illustrates an example simplified procedure 700 for transmitting an IP packet from a disconnected router to a destination using a mobile device in accordance with one or more embodiments described herein, particularly from the perspective of a disconnected FAR. The procedure 700 may start at step 705, and continues to step 710, where, as described in greater detail above, a stationary router 300 detects a disconnected backhaul link 305 to a destination 310, where the stationary router has a message 315 to send to the destination. In order to reach the destination, in step 715, the stationary router sends the message to a traveling mobile device 320, to cause the message to be (hopefully) sent toward the destination. As described above, the mobile device may store the message in a local memory while traveling and thus transporting the message to a remote stationary router (e.g., connected FAR 410).

In response to not receiving an acknowledgment in step 720, then in step 725 the disconnected stationary router may continue to send additional copies of the message to other traveling mobile devices, to hopefully cause a copy of the message to be sent toward the destination. For instance, as noted above, a timer may be set such that it may be determined whether the acknowledgment is received by expiration of the timer. If an acknowledgment is received in step 720, however, then in step 730 the disconnected FAR may cease sending additional copies of the message to other traveling mobile devices. The illustrative procedure may then end in step 735.

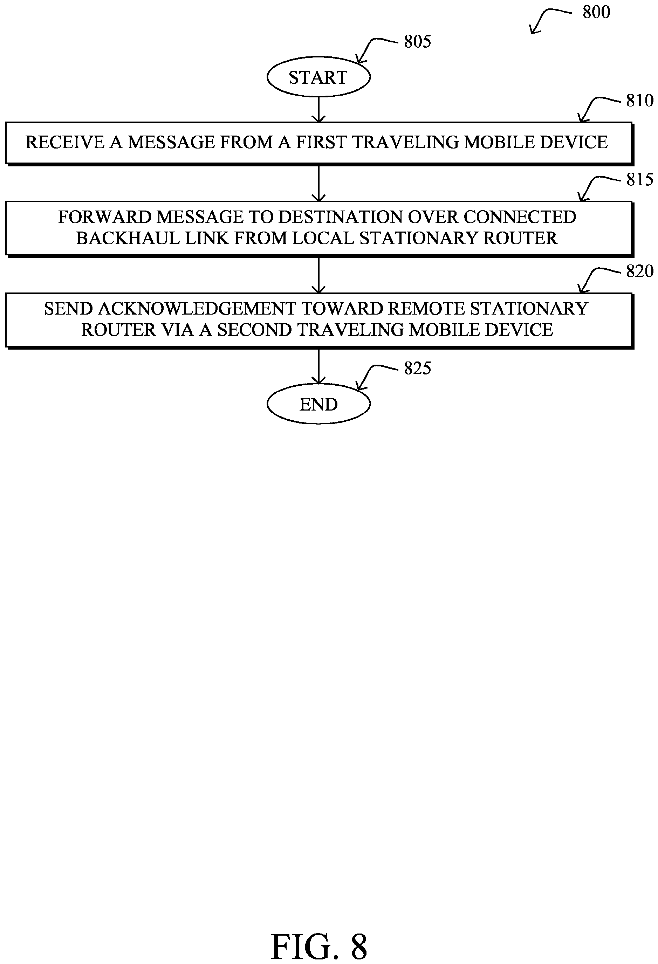

In addition, FIG. 8 illustrates another example simplified procedure 800 for transmitting an IP packet from a disconnected router to a destination using a mobile device in accordance with one or more embodiments described herein, particularly from the perspective of a connected FAR. The procedure 800 may start at step 805, and continues to step 810, where, as described in greater detail above, a local stationary router (e.g., FAR 410) receives a message 315 from a first traveling mobile device 320, wherein the message originated from a remote stationary router (e.g., disconnected FAR 300). In step 815, the local stationary router forwards the message to the intended destination 310 over its connected backhaul link 405. In response to forwarding the message, in step 820 the local stationary router sends an acknowledgment 500 toward the remote (disconnected) stationary router via a second traveling mobile device 505. For instance, as mentioned above, it may be first determined that the second traveling mobile device is traveling in a direction opposite from the first traveling mobile device. The illustrative procedure may end in step 825.

It should be noted that while certain steps within procedures 700 and 800 may be optional as described above, the steps shown in FIGS. 7-8 are merely examples for illustration, and certain other steps may be included or excluded as desired. Further, while a particular order of the steps is shown, this ordering is merely illustrative, and any suitable arrangement of the steps may be utilized without departing from the scope of the embodiments herein. Moreover, while procedures 700 and 800 are described separately, certain steps from each procedure may be incorporated into each other procedure, and the procedures are not meant to be mutually exclusive.

The techniques described herein, therefore, provide for transmitting an IP packet from a disconnected router to a destination using a mobile device. In particular, the techniques herein provide for a reliable message transmission process with an acknowledgment messaging system (e.g., a bi-directional communication system), avoiding duplication of critical messages from a stranded (disconnected) stationary router. For instance, without the acknowledgment, the connected FAR and/or control center may become overloaded with duplicate messages from the stranded FAR. In addition, the techniques may also provide for additional network security by allowing critical messages to reach the intended destination through mobile transmission, such as when an attacker has purposefully disconnected the backhaul link (e.g., physically or through jamming techniques).

While there have been shown and described illustrative embodiments that provide for transmitting an IP packet from a disconnected router to a destination using a mobile device, it is to be understood that various other adaptations and modifications may be made within the scope of the embodiments herein. For example, the embodiments herein have been generally described in terms of vehicular transport of the packets. However, the embodiments in their broader sense are not as limited, and may, in fact, be used with other types of mobile device transport, such as personal devices (e.g., smartphones, tablets). In addition, while certain protocols are shown, other suitable protocols may be used, accordingly. Also, while the techniques generally describe the backhaul link as a wireless backhaul link (e.g., 3G/LTE, Wimax, WiFi, etc.), one or more of the backhaul links may in fact be a wired link, where disconnection could imply hardware or software failure of the link.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/RAM/EEPROM/etc.) having program instructions executing on a computer, hardware, firmware, or a combination thereof. Accordingly this description is to be taken only by way of example and not to otherwise limit the scope of the embodiments herein. Therefore, it is the object of the appended claims to cover all such variations and modifications as come within the scope of the embodiments herein.

## Claims

1. A method, comprising:
detecting (710) at a stationary router that a backhaul link providing connection between the stationary router and a destination has become disconnected;
in response to detecting the disconnected backhaul link, locating a first traveling mobile device traveling in a direction of the destination and sending (715) a message to the first traveling mobile device, to cause the message to be stored and transported to a remote stationary router by the travelling mobile device from where the message can be sent toward the destination via the remote stationary router;
receiving (720) an acknowledgement from the remote stationary router via a second traveling mobile device traveling in a direction substantially opposite to the direction of travel of the first traveling mobile device; and
in response to receiving the acknowledgment from the remote stationary router via the second traveling mobile device, ceasing (730) to send copies of the message to other traveling mobile devices.

2. The method of claim 1, further comprising:
in response to not receiving the acknowledgment, sending a copy of the message to a third traveling mobile device, to cause the copy of the message to be sent toward the destination.

3. The method of claim 2, further comprising:
setting a timer; and
determining that the acknowledgment is not received in response to an expiration of the timer.

4. The method of claim 3, further comprising:
setting the timer to a value selected from a group consisting of:
a fixed value; and
an exponentially decreasing value.

5. The method of claim 1, further comprising: in response to determining that the backhaul link has become connected prior to receiving the acknowledgment, sending the message to the destination over the connected backhaul link.

6. The method of claim 5, further comprising:
indicating in the message sent over the connected backhaul link that the message was previously sent.

7. The method of claim 1, further comprising:
limiting the sending of messages to a particular type of message.

8. The method of claim 1, wherein the first and second traveling mobile devices are vehicles traveling in opposite directions.

9. A method, comprising:
receiving (810) a message at a local stationary router from a first traveling mobile device traveling in a first direction, wherein the message originated from a remote stationary router at which a backhaul link providing a connection between the remote stationary router and a destination had become disconnected;
forwarding (815) the message to the destination over a connected backhaul link from the local stationary router; and
in response to forwarding the message, locating a second traveling mobile device traveling in a direction substantially opposite to the first direction of travel of the first traveling mobile device and sending (820) an acknowledgment to the second travelling mobile device to be carried to the remote stationary router by the second traveling mobile device, the acknowledgement indicating to the remote stationary router to cease sending copies of the message to other traveling mobile devices.

10. The method of claim 9 wherein the first and second traveling mobile devices are vehicles traveling on opposite directions.

11. An apparatus, comprising:
a first network interface to communicate over a backhaul link;
a second network interface to communicate wirelessly with mobile devices;
a processor coupled to the network interfaces and adapted to execute one or more processes; and
a memory configured to store a process, executable by the processor at a stationary router, the process when executed operable to perform a method according to any one of claims 1 to 8.

12. An apparatus, comprising:
a first network interface to communicate over a backhaul link;
a second network interface to communicate wirelessly with mobile devices;
a processor coupled to the network interfaces and adapted to execute one or more processes; and
a memory configured to store a process, executable by the processor at a stationary router, the process when executed operable to perform a method according to either claim 9 or claim 10.

13. A system, comprising:
a first stationary router comprising an apparatus according to claim 11;
a first mobile device configured to receive the message from the first stationary router;
a second stationary router comprising an apparatus according to claim 12; and
a second mobile device configured to receive the acknowledgment from the second stationary router and to deliver the acknowledgment to the first stationary router.

14. The system of claim 13, wherein the first and second traveling mobile devices are vehicles traveling in substantially opposite directions.

## Patentansprüche

1. Verfahren, das Folgendes umfasst:
Erfassen (710) an einem stationären Router, dass eine Backhaul-Verbindung, die eine Verbindung zwischen dem stationären Router und einem Ziel bereitstellt, unterbrochen wurde;
als Reaktion auf das Erfassen der unterbrochenen Backhaul-Verbindung, Lokalisieren einer ersten fahrenden mobilen Vorrichtung, die in einer Richtung des Ziels fährt und eine Nachricht an die erste fahrende mobile Vorrichtung sendet (715), um zu bewirken, dass die Nachricht von der fahrenden mobilen Vorrichtung gespeichert und zu einem entfernten stationären Router transportiert wird, bei dem die Nachricht über den entfernten stationären Router zu dem Ziel gesendet werden kann;
Empfangen (720) einer Bestätigung von dem entfernten stationären Router über eine zweite fahrende mobile Vorrichtung, die in einer Richtung im Wesentlichen entgegengesetzt zu der Fahrtrichtung der ersten fahrenden mobilen Vorrichtung fährt; und
als Reaktion auf das Empfangen der Bestätigung von dem entfernten stationären Router über die zweite fahrende mobile Vorrichtung, Aufhören (730), Kopien der Nachricht an andere fahrende mobile Vorrichtungen zu senden.

2. Verfahren nach Anspruch 1, das ferner Folgendes umfasst:
als Reaktion auf das Nicht-Empfangen der Bestätigung, Senden einer Kopie der Nachricht an eine dritte fahrende mobile Vorrichtung, damit die Kopie der Nachricht zu dem Ziel gesendet wird.

3. Verfahren nach Anspruch 2, das ferner Folgendes umfasst:
Einstellen eines Zeitgebers; und
Bestimmen, dass die Bestätigung nicht als Reaktion auf einen Ablauf des Zeitgebers empfangen wird.

4. Verfahren nach Anspruch 3, das ferner Folgendes umfasst:
Einstellen des Zeitgebers auf einen Wert, der aus einer Gruppe ausgewählt wird, die aus Folgendem besteht:
einem festen Wert; und
einem exponentiell abnehmenden Wert.

5. Verfahren nach Anspruch 1, das ferner Folgendes umfasst: als Reaktion darauf, dass die Backhaul-Verbindung vor dem Empfangen der Bestätigung hergestellt wurde, Senden der Nachricht an das Ziel über die hergestellte Backhaul-Verbindung.

6. Verfahren nach Anspruch 5, das ferner Folgendes umfasst:
Angeben in der Nachricht, die über die hergestellte Backhaul-Verbindung gesendet wurde, dass die Nachricht zuvor gesendet wurde.

7. Verfahren nach Anspruch 1, das ferner Folgendes umfasst:
Beschränken des Sendens von Nachrichten auf eine bestimmte Art von Nachricht.

8. Verfahren nach Anspruch 1, wobei die erste und zweite fahrende mobile Vorrichtung Fahrzeuge sind, die in entgegengesetzte Richtungen fahren.

9. Verfahren, das Folgendes umfasst:
Empfangen (810) einer Nachricht an einem lokalen stationären Router von einer ersten fahrenden mobilen Vorrichtung, die in einer ersten Richtung fährt, wobei die Nachricht von einem entfernten stationären Router stammt, bei dem eine Backhaul-Verbindung, die eine Verbindung zwischen dem entfernten stationären Router und einem Ziel bereitstellt, getrennt wurde;
Weiterleiten (815) der Nachricht an das Ziel über eine hergestellte Backhaul-Verbindung von dem lokalen stationären Router; und
als Reaktion auf die Weiterleitung der Nachricht, Lokalisieren einer zweiten fahrenden mobilen Vorrichtung, die in einer Richtung im Wesentlichen entgegengesetzt zu der Fahrtrichtung der ersten fahrenden mobilen Vorrichtung fährt und Senden (820) einer Bestätigung an die zweite fahrende mobile Vorrichtung, die von der zweiten fahrenden mobilen Vorrichtung zu dem entfernten stationären Router übertragen werden soll, wobei die Bestätigung anzeigt, dass der entfernte stationäre Router mit dem Senden von Kopien der Nachricht zu anderen fahrenden mobilen Vorrichtungen aufhört.

10. Verfahren nach Anspruch 9, wobei die erste und zweite fahrende mobile Vorrichtung Fahrzeuge sind, die in entgegengesetzte Richtungen fahren.

11. Vorrichtung, die Folgendes umfasst:
eine erste Netzwerkschnittstelle zur Kommunikation über eine Backhaul-Verbindung;
eine zweite Netzwerkschnittstelle zur drahtlosen Kommunikation mit mobilen Vorrichtungen;
einen Prozessor, der mit den Netzschnittstellen gekoppelt ist und dafür ausgelegt ist, einen oder mehrere Prozesse auszuführen; und
einen Speicher, der dafür konfiguriert ist, einen Prozess zu speichern, der von dem Prozessor in einem stationären Router ausgeführt werden kann, wobei der Prozess, wenn er ausgeführt wird, dafür ausgelegt ist, ein Verfahren nach einem der Ansprüche 1 bis 8 durchzuführen.

12. Vorrichtung, die Folgendes umfasst:
eine erste Netzwerkschnittstelle zur Kommunikation über eine Backhaul-Verbindung;
eine zweite Netzwerkschnittstelle zur drahtlosen Kommunikation mit mobilen Vorrichtungen;
einen Prozessor, der mit den Netzschnittstellen gekoppelt ist und dafür ausgelegt ist, einen oder mehrere Prozesse auszuführen; und
einen Speicher, der dafür konfiguriert ist, einen Prozess zu speichern, der von dem Prozessor in einem stationären Router ausgeführt werden kann, wobei der Prozess, wenn er ausgeführt wird, dafür ausgelegt ist, ein Verfahren nach Anspruch 9 oder Anspruch 10 durchzuführen.

13. System, das Folgendes umfasst:
einen ersten stationären Router, der eine Vorrichtung nach Anspruch 11 umfasst;
eine erste mobile Vorrichtung, die dafür konfiguriert ist, die Nachricht von dem ersten stationären Router zu empfangen;
einen zweiten stationären Router, der eine Vorrichtung nach Anspruch 12 umfasst; und
eine zweite mobile Vorrichtung, die dafür konfiguriert ist, die Bestätigung von dem zweiten stationären Router zu empfangen und die Bestätigung zu dem ersten stationären Router zu senden.

14. System nach Anspruch 13, wobei die erste und zweite fahrende mobile Vorrichtung Fahrzeuge sind, die in entgegengesetzte Richtungen fahren.

## Revendications

1. Procédé, comportant les étapes consistant à :
détecter (710) au niveau d'un routeur stationnaire qu'une liaison terrestre mettant en oeuvre une connexion entre le routeur stationnaire et une destination s'est retrouvée déconnectée ;
en réponse à la détection de la liaison terrestre déconnectée, repérer un premier dispositif mobile en déplacement qui se déplace dans une direction de la destination et envoyer (715) un message au premier dispositif mobile en déplacement, pour amener le message à être stocké et transporté jusqu'à un routeur stationnaire à distance par le dispositif mobile en déplacement depuis là où le message peut être envoyé vers la destination par le biais du routeur stationnaire à distance ;
recevoir (720) un accusé de réception en provenance du routeur stationnaire à distance par le biais d'un deuxième dispositif mobile en déplacement qui se déplace dans une direction sensiblement opposée par rapport à la direction de déplacement du premier dispositif mobile en déplacement ; et
en réponse à la réception de l'accusé de réception en provenance du routeur stationnaire à distance par le biais du deuxième dispositif mobile en déplacement, cesser (730) d'envoyer des copies du message à d'autres dispositifs mobiles en déplacement.

2. Procédé selon la revendication 1, comportant par ailleurs :
en réponse à la non-réception de l'accusé de réception, l'étape consistant à envoyer une copie du message à un troisième dispositif mobile en déplacement, pour amener la copie du message à être envoyée vers la destination.

3. Procédé selon la revendication 2, comportant par ailleurs les étapes consistant à :
régler une temporisation ; et
déterminer que l'accusé de réception n'est pas reçu en réponse à une expiration de la temporisation.

4. Procédé selon la revendication 3, comportant par ailleurs :
l'étape consistant à régler la temporisation selon une valeur sélectionnée dans le groupe constitué par :
une valeur fixe ; et
une valeur exponentiellement décroissante.

5. Procédé selon la revendication 1, comportant par ailleurs : en réponse à la détermination que la liaison terrestre s'est retrouvée connectée avant la réception de de l'accusé de réception, l'étape consistant à envoyer le message jusqu'à la destination par l'intermédiaire de la liaison terrestre connectée.

6. Procédé selon la revendication 5, comportant par tailleurs :
l'étape consistant à indiquer dans le message envoyé par l'intermédiaire de la liaison terrestre connectée que le message a été envoyé précédemment.

7. Procédé selon la revendication 1, comportant par ailleurs :
l'étape consistant à limiter l'envoi de messages à un type particulier de message.

8. Procédé selon la revendication 1, dans lequel les premier et deuxième dispositifs mobiles en déplacement sont des véhicules qui se déplacent dans des directions opposées.

9. Procédé, comportant les étapes consistant à :
recevoir (810) un message au niveau d'un routeur stationnaire local en provenance d'un premier dispositif mobile en déplacement qui se déplace dans une première direction, dans lequel le message en provenance d'un routeur stationnaire à distance au niveau duquel une liaison terrestre mettant en oeuvre une connexion entre le routeur stationnaire et une destination s'est retrouvée déconnectée ;
réacheminer (815) le message jusqu'à la destination par l'intermédiaire d'une liaison terrestre connectée en provenance du routeur stationnaire local ; et
en réponse au réacheminement du message, repérer un deuxième dispositif mobile en déplacement qui se déplace dans une direction sensiblement opposée par rapport à la première direction de déplacement du premier dispositif mobile en déplacement et envoyer (820) un accusé de réception au deuxième dispositif mobile en déplacement devant être transporté jusqu'au routeur stationnaire à distance par le deuxième dispositif mobile en déplacement, l'accusé de réception indiquant au routeur stationnaire à distance de cesser d'envoyer des copies du message à d'autres dispositifs mobiles en déplacement.

10. Procédé selon la revendication 9, dans lequel les premier et deuxième dispositifs mobiles en déplacement sont des véhicules qui se déplacent dans des directions opposées.

11. Appareil, comportant :
une première interface de réseau servant à communiquer par l'intermédiaire d'une liaison terrestre ;
une deuxième interface de réseau servant à communiquer sans fil avec des dispositifs mobiles ;
un processeur couplé aux interfaces de réseau et adapté pour exécuter un ou plusieurs processus ; et
une mémoire configurée pour stocker un processus, en mesure d'être exécuté par le processeur au niveau d'un routeur stationnaire, le processus, quand il est exécuté, servant à effectuer un procédé selon l'une quelconque des revendications 1 à 8.

12. Appareil, comportant :
une première interface de réseau servant à communiquer par l'intermédiaire d'une liaison terrestre ;
une deuxième interface de réseau servant à communiquer sans fil avec des dispositifs mobiles ;
un processeur couplé aux interfaces de réseau et adapté pour exécuter un ou plusieurs processus ; et
une mémoire configurée pour stocker un processus, en mesure d'être exécuté par le processeur au niveau d'un routeur stationnaire, le processus, quand il est exécuté, servant à effectuer un procédé selon l'une quelconque parmi soit la revendication 9 soit la revendication 10.

13. Système, comportant :
un premier routeur stationnaire comportant un appareil selon la revendication 11 ;
un premier dispositif mobile configuré pour recevoir le message en provenance du premier routeur stationnaire ;
un deuxième routeur stationnaire comportant un appareil selon la revendication 12 ; et
un deuxième dispositif mobile configuré pour recevoir l'accusé de réception en provenance du deuxième routeur stationnaire et pour remettre l'accusé de réception au premier routeur stationnaire.

14. Système selon la revendication 13, dans lequel les premier et deuxième dispositifs mobiles en déplacement sont des véhicules qui se déplacent dans des directions opposées.
